Europäisches Patentamt

(19) European Patent Office (11) Publication number: **0 042 035**
Office européen des brevets **B1**

(12) **EUROPEAN PATENT SPECIFICATION**

(45) Date of publication of patent specification: **13.06.84**

(21) Application number: **81102047.8**

(22) Date of filing: **19.03.81**

(51) Int. Cl.³: **G 06 F 15/20,**
**G 06 F 15/40, G 06 K 9/00,**
**G 06 F 15/38, G 06 F 3/00**

(54) Method and apparatus for vectorizing text words in a text processing system.

(30) Priority: **17.06.80 US 160345**

(43) Date of publication of application:
**23.12.81 Bulletin 81/51**

(45) Publication of the grant of the patent:
**13.06.84 Bulletin 84/24**

(84) Designated Contracting States:
**CH DE FR GB IT LI NL SE**

(56) References cited:
**DE - A - 2 513 566**
**DE - A - 2 754 441**
**DE - B - 2 541 204**
**US - A - 3 995 254**

(73) Proprietor: **International Business Machines**
**Corporation**
**Old Orchard Road**
**Armonk, N.Y. 10504 (US)**

(72) Inventor: **Glickman, David**
**1568 Andover Lane**
**Frederick Maryland 21701 (US)**

(74) Representative: **Bonneau, Gérard**
**Compagnie IBM France Département de Propriété**
**Industrielle**
**F-06610 La Gaude (FR)**

Courier Press, Leamington Spa, England.

## Description

### Technical field

The invention disclosed herein relates to text processing systems and more particularly a method and apparatus for vectorizing text words in a text processing system without the use of complex mathematics functions.

### Background art

A threshold problem in post processing of the output stream from a keyboard, character reader, or voice analyzer is presented by the necessity of executing a quick comparison of the output word with a dictionary of acceptable words and generating a signal indicating the presence or absence of a correctly spelled word. An ancillary problem is created by the need to store a dictionary of words large enough to be meaningful and useful while not requiring so much storage space that the system becomes economically unfeasible.

A solution to the latter problem is disclosed in U.S.—A—3,995,254 which discloses a word vectorization system wherein each dictionary word is represented as a vector having a magnitude and unique angle. The magnitudes are used as addresses to access the angles stored in memory. It was shown that this technique provides a significant reduction in required storage over storing the characters of the same number of dictionary words.

However, implementation of the word vectorization technology described in the Rosenbaum patent in minicomputers has been shown to be of limited value. The reason is that one characteristic of the mini-computer is the lack of complex mathematics function capability such as multiplication, division, square root, logarithms, and trigonometry. Since the word vectorization technology described in the Rosenbaum patent extensively employs these complex mathematics functions, methods for simulating these functions must be utilized. The simulation methods heretofore used have greatly reduced the computing efficiency of the mini-processor.

### Summary of the invention

The present invention as defined in claims 1 and 5 provides a method and an apparatus for vectorizing dictionary words for spelling verification without the use of complex mathematics functions and without greatly degrading system performance.

The apparatus of the invention as defined in claim 1 includes decode means for decoding the characters of the input words into numerical representations; a magnitude table addressably connected to the decode means for storing magnitude values corresponding to each numerical representation output by said decode means; a first adder connected to the magnitude table for accumulating a magnitude sum of the magnitude values output by said magnitude table; a second adder connected to the decode means for accumulating partial sums of the numerical representations output by the decode means, binary table connected to the second adder for storing a plurality of binary numbers addressable to output one of the binary numbers for each partial sum accumulated by the second adder; third adder connected to the binary table storage means for accumulating a modulo-2 sum of the output of the binary table; and binary-to-decimal decode means connected to the third adder for converting the output of the adder from a binary number to a decimal angle value.

### Brief description of the drawing

Fig. 1 is a schematic drawing of the word vectorization apparatus of the present invention.

Fig. 2 is a flow diagram of the word vectorization method.

Fig. 3 is an example of the angle calculation of the present invention.

### Description of an embodiment of the invention

The digital reference matrix approach to spelling verification disclosed in U.S.—A—3,995,254 was conceived as a highly efficient, low storage approach to validating whether a word was spelled, keyed, or read correctly. This approach utilizes vectorization of alpha words into numerical magnitude and angle representations that are mathematically accurate. The present invention offers a simplified alternative to the complex mathematics utilized in US—A 3,995,254 by generating "pseudo" angles.

The apparatus, in order to provide a useful result, must contain the following properties:

It must be sensitive to each character and the character's placement in the word.

It must be sensitive to letter transpositions in the word.

It must be insensitive to word length being a criterion in determining the actual pseudo angle (i.e., small words can produce large or small pseudo angles as easily as large words can).

It must be insensitive to magnitude size.

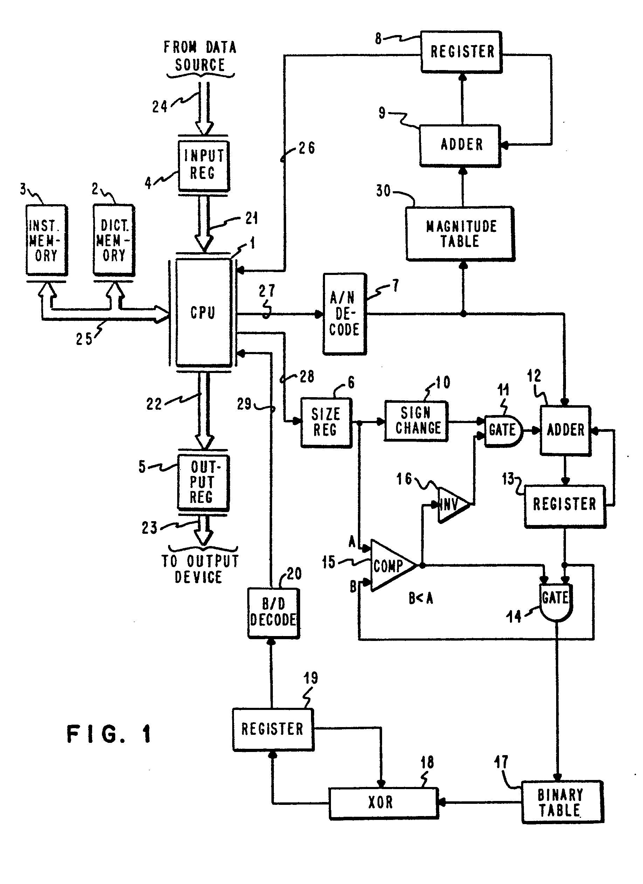

Referring now to Fig. 1 there is shown diagrammatically word vectorization apparatus of the present invention. The system includes a mini-processor or CPU 1 which may be any well known mini-processor such as the IBM System 7. The CPU 1 communicates with an input register 4 over input bus 21. The input register 4 communicates over line 24 with an external data source (not shown) such as a keyboard or optical character reader.

The CPU 1 is in two-way communication over bus 25 with an instruction memory 3 and dictionary memory 2. The instruction memory 3 may be a random access memory or a read only memory containing instructions that control the operation of the CPU 1. The dictionary memory 2, likewise, may be a random access memory or read only memory in which is stored representations of correctly spelled words which are accessed and compared to the input words to verify the spelling of the input words. Words are represented in the dictionary memory 2 as vectors as disclosed in U.S.—A 3,995,254 where the magnitude component of the vector is used as an address to access the dictionary memory 2 for corresponding angle values. The angle values, however, are pseudo angle values that are generated using a binary table 17 as will be described below. Since the techniques for generating the vectors for storage in the dictionary memory 2 and the technique for generating the vectors for accessing the dictionary memory 2 are identical, only the latter will be described in detail.

A word input to the register 4 for verification of the correctness of its spelling is accessed by the CPU 1 and output on line 27 to an alphanumeric (A/N) decode 7. The A/N decode 7 sequentially converts each alpha character in the word to a corresponding numeric value. For example, the letters A through Z may be converted to numeric values 1 through 26. Additionally, the apostrophe may be included as an acceptable character and converted to the numeric value 27. The numeric values sequentially index into a magnitude storage table 30 to produce a partial magnitude for each character in the word. For example, the numeric value one, representing the letter A accesses the first address in the magnitude table and causes its content to be output to the adder 9. The numerical value two accesses the second address, etc. The numbers stored in the magnitude table 30 may be randomly assigned to the addresses or may be selectively assigned based on the frequency of occurrence of the corresponding alpha characters in the language. The magnitude values output from magnitude table 30 are added by adder 9 to the contents of register 8 to accumulate a sum representing the magnitude component for the input word. The numeric values output from the A/N decode 7 are also added by adder 12 to the contents of register 13 to accumulate the angle terms for accessing the binary table 17. The binary table 17 has stored therein a table of 8-bit binary numbers representing a displacement value formed by the partial sums accumulated in register 13. While 8-bit binary numbers are used herein it is understood 12-bit, 16-bit, or other length binary numbers may be selected as well. The binary values stored in table 17 may represent an ascending list of binary numbers beginning with zero and extending to 255. However, the 256 binary numbers that are stored in the table 17 may be stored in a sequence statistically determined by the frequency of occurrence of the different characters in the alphabet and by the relationship of the likelihood that one particular character will precede or follow another character. These statistical relationships will vary from one language to another and will result in a different configuration of the binary words in the table 17 from one language to another. Additionally, the size of the table 17 must take into account the average word length in the language so as to minimize wrap-around as will be described hereafter.

A size register 6 is connected to CPU 1 through line 28 and receives a numerical value representing the number of entries stored in the binary table 17. The number in the size register 6 is input at A to comparator 15 where it is compared to each partial sum in the register 13. As each character value from the A/N decode 7 is accumulated in the register 13 it is gated through gate 14 by the output of the comparator 15 to the binary table 17 as long as the accumulated value in the register 13 is less than the size of the binary table 17. When the accumulated value in the register 13 exceeds the binary table size, the output of the comparator 15 triggers gate 11 through inverter 16 to pass the contents of size register 6 with a negative sign applied at the sign change register 10 to adder 12. The negative value of the contents of the size register 6 is added to the register 13 by adder 12 to effectively subtract the binary table size from the contents of the register 13 and cause wrap-around in the accessing of the binary table 17. Wrap-around means the accessing returns to the start of the binary table 17.

As was previously stated each numerical character value is used to cumulatively access the binary table 17. Each 8-bit output from the binary table 17 is exclusive OR'ed (modulo-2 added) at gate 18 with the contents of the register 19 and stored in the register 19. At the end of the word, the cumulative value is converted from a binary representation to a decimal representation at B/D decode 20 and input to the CPU 1 through line 29. The magnitude component input to the CPU 1 on line 26 and the angle component input to the CPU 1 on line 29 are used to access the dictionary memory 2 for corresponding magnitude and angle components. If corresponding magnitude and angle values are present in the dictionary memory 2 then the CPU 1 will output a signal on line 22 through the output register 5 and to an output device on line 23 to indicate that the word is correctly spelled. If the corresponding magnitude and angle values are not found in the dictionary memory 2 then a signal is output by the CPU 1 indicating that the word is not correctly spelled.

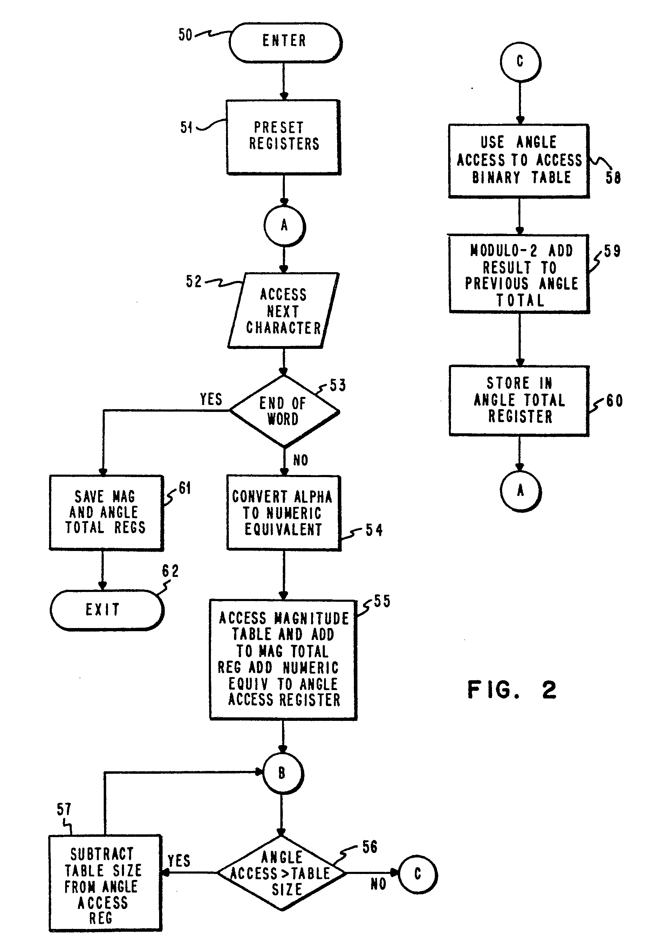

Referring now to Fig. 2 there is shown a flow diagram of the method for generating vector equivalents for input alpha words in accordance with the present invention. This method is suitable for being implemented on a general purpose computer as well as with the special purpose circuitry shown in Fig. 1. The routine is entered at block 50 and the storage registers are reset at block 51. At block 52 the next character of the word to be vectorized is accessed. The character is tested at block 53 to determine if it is the end of the word. The end of the word is defined by a character such as a space, tab, carrier return, or punctuation. If the next character is the end of a word the accumulated magnitude and angle totals are saved at block 61 and the routine is exited at block 62.

When the next character is not the end of a word, the routine branches to block 54 wherein the alpha character is decoded to a predetermined numeric equivalent. As was previously stated, the numerical equivalents may be the numbers 1 through 26 to represent alpha characters A through Z, or may be any other numerical values selected. At block 55 the numeric equivalents are used to access the magnitude table and the result is accumulated in the magnitude register. The numeric equivalents are summed in the angle total register. At block 56 the angle total is tested to determine if it exceeds the size of the binary table 17. If the angle total does exceed the binary table 17 size then the table 17 size is subtracted from the angle total at block 57.

When the angle total is less than the binary table 17 size, the angle total is used to access the binary table 17 at block 58. The number output from the binary table 17 is modulo-2 added (exclusive OR'ed) to the previous output total at block 59. The result is stored in a total register at block 60 and a branch is taken back to A to access the next character.

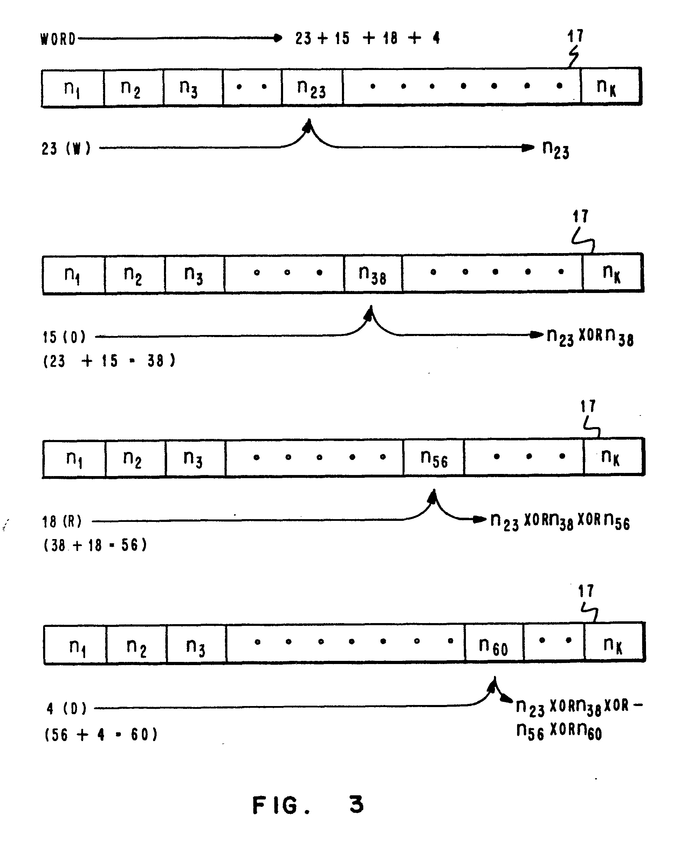

Fig. 3 shows an example of an angle produced for the word "word" using the binary table 17 of the present invention. The characters of "word" are converted to numeric equivalents 23, 15, 18 and 4, respectively. The binary table 17 contains $n_1$ through $n_k$ 8-bit binary numbers which are statistically determined as previously described. W, the 23rd character in the alphabet, accesses the 23rd position, $n_{23}$, in the binary table 17. The next character, O, has a numerical equivalent of 15. The 15 is added to 23 to produce a sum of 38. This addition takes place in adder 12 and register 13 in Fig. 1. The sum, 38, accesses the 38th position in the binary table 17 and a result is exclusive OR'ed with the previous output from the binary table 17, $n_{23}$, and the result is stored in register 19. The next character in "word" is R which has a numerical equivalent of 18. Eighteen is added to 38 to produce a sum of 56 which accesses the 56th position in the binary table 17. The output, $n_{56}$, is then exclusive OR'ed with the contents of register 19. The fourth character in "word" is D which has a numerical equivalent of 4. Four is added to the previous sum of 56 to produce a sum of 60. The sum 60 is then used to access the 60th position in the binary table 17. The result, $n_{60}$, is then exclusive OR'ed with the previous results stored in register 19 to produce a final binary representation for the angle. The final binary representation for the angle stored in register 19 in Fig. 1 is converted from binary to decimal representation by decode 20 where it is output over line 29 to the CPU 1.

## Claims

1. Apparatus for vectorizing input words for comparison to a dictionary of correctly spelled words in a text processing system including a mini-processor (1), a memory (3) for storing instructions for controlling said mini-processor, a memory (2) for storing representations of said dictionary of correctly spelled words, and decode means connected to said mini-processor for decoding the characters of the input words into numerical representations; said apparatus being characterized in that it comprises:

a magnitude table storage means (30) addressably connected to said decode means for storing magnitude values corresponding to each numerical representation output by said decode means;

a first adder means (8, 9) connected to said magnitude table storage means and said mini-processor for accumulating a magnitude sum of the magnitude values output by said magnitude table storage means and outputting said magnitude sum to said mini-processor;

a second adder means (12, 13) connected to said decode means for accumulating partial sums of said numerical representations output by said decode means;

binary table storage means (17) connected to said second adder means for storing a plurality of binary numbers addressable to output one of said binary numbers for each partial sum accumulated by said second adder means;

third adder means (18, 19) connected to said binary table storage means for accumulating a modulo-2 sum of the output of said binary table storage means; and

binary-to-decimal decode means (20) connected to said third adder means and said mini-processor for converting the output of said third adder means from a binary number to a decimal angle value and outputting the result to said mini-processor.

2. Apparatus according to claim 1 in which said binary table storage means comprise:

a binary table (17) for storing a plurality of binary numbers;

register means (6) connected to said mini-processor for storing a value representing the size of said binary table;

compare means (15) connected to said second adder means and said register means for comparing the accumulated partial sum to the table size value; and

gate means (14) connected to said binary table and said second adder means and operable by said compare means for accessing said binary table at the address equal to said partial sum when the partial sum is less than said table size value;

3. Apparatus according to Claim 2 further including means (10, 11) connected to said second adder means and said register means and responsive to said compare means for subtracting said table size value from said partial sum when said partial sum exceeds said table size value.

4. Apparatus according to Claim 1, 2 or 3 wherein said third adder means is an exclusive-OR.

5. Method for vectorizing text words for comparison to a dictionary of words in a text processing system including a mini-processor, said method being performed on apparatus according to any one of said preceding claims, including the step of

(a) converting the characters of input text words to numerical representations and being characterised by the steps of:

(b1) utilizing said numerical representations to access a magnitude weighting table and

(b2) summing the magnitude weightings selected from said table to produce a numerical vector magnitude component;

(c1) iteratively accumulating said numerical representations to produce partial sums;

(c2) accessing a binary storage device to produce an output binary number for each produced partial sum,

(c3) modulo-2 adding said output binary numbers and

(c4) converting the modulo-2 sum to a decimal vector angle component; and

(d) outputting said vector magnitude and vector angle components to said mini-processor.

6. Method according to Claim 5 wherein step (c1) further includes the steps of:

iteratively comparing the produced partial sum to a predetermined storage limit value for the binary storage device and subtracting said storage limit value from said partial sum when said partial sum exceeds said storage limit value to produce wrap-around of the accessing of said binary storage device.

**Patentansprüche**

1. Geraet zur Vektordarstellung von Textworten zum Vergleich mit einem aus richtig buchstabierten Woerten zusammengesetzten Woerterbuch in einem Textverarbeitungssystem mit einem Mikroprozessor (1), einem Speicher (3) zur Einspeicherung von Befehen fuer die Steuerung des Miniprozessors, einem Speicher (2) zur Einspeicherung von Darstellungen des aus richtig buchstabierten Woerten zusammengesetzten Woerterbuchs und mit dem Miniprozessor verbundenen Dekodierungsmitteln zur Umsetzung der den Eingangsworten entsprechenden Zeichen in numerische Darstellungen, dadurch gekennzeichnet, dass es aufweist:

— mit den Dekodierungsmitteln durch Adressierung verbundene Speichermittel fuer die Groessentabelle (30), die die jeder numerischen den Dekodierungsmitteln entnommenen Darstellung entsprechenden Groessenwerte einspeichern,

— ein erstes mit den Speichermitteln fuer die Groessentabelle und dem Miniprozessor verbundenes Addierglied (8, 9) zur Akkumulierung einer aus den den Speichermitteln entnommenen Groessenwerten berechneten Groessensumme und zur Ausgabe und Zufuehrung der Groessensumme zu dem Miniprozessor,

— eine zweites mit den Dekodierungsmitteln verbundenes Addierglied (12, 13) zur Akkumulierung von aus den numerischen den Dekodierungsmitteln entnommenen Darstellungen berechneten Teilsummen,

— binaere mit dem zweiten Addierglied verbundene Tabellenspeichermittel (17) zur Einspeicherung einer Vielfalt von binaeren adressierbaren Zahlen zur Ausgabe einer der binaeren Zahlen fuer jede von dem zweiten Addierglied akkumulierte Teilsumme,

— ein drittes mit den Speichermitteln fuer die binaere Tabelle verbundenes Addierglied (18, 19) zur Akkumulierung einer Basis-2-Summe aus der Ausgabe der Speichermittel fuer die binaere Tabelle,

— mit dem dritten Addierglied und dem Miniprozessor verbundene Binaer-Dezimal-Dekodierungsmittel (20) zur Umsetzung der dem dritten Addierglied in der Form einer binaeren Zahl entnommenen Ausgabe in einen dezimalen Winkelwert und zur Ausgabe und Zufuehrung des Ergebnisses zu dem Miniprozessor.

2. Geraet nach Anspruch 1, in dem die Speichermittel fuer die binaere Tabelle folgendes aufweisen:

— eine binaere Tabelle (17) zum Speichern einer Vielfalt von binaeren Zahlen,

— ein mit dem Miniprozessor verbundenes Register (6) zum Speichern eines den Umfang der binaeren Tabelle meinenden Wertes,

— mit dem zweiten Addierglied und dem Register verbundene Vergleichsmittel (15) zum Vergleich der akkumulierten Teilsumme mit der Umfangsgroesse der Tabelle,

— ein mit der binaeren Tabelle und dem zweiten Addierglied verbundenes Tor (14), das von den Vergleichsmitteln derart betaetigbar ist, dass es Zugriff zu der binaeren Tabelle an der zu der Teilsumme zugeordneten Adresse gestattet, wenn die Teilsumme niedriger als den Umfangswert der Tabelle ist.

3. Geraet nach Anspruch 2, der weiterhin mit dem zweiten Addierglied und dem Register verbundene und auf den Vergleichsmitteln ansprechbare Mittel (10, 11) zum Subtrahieren des Umfangswerts der Tabelle von der Teilsumme aufweist, wenn die Teilsumme hoeher als den Umfangswert der Tabelle ist.

4. Geraet nach Anspruch 1, 2 oder 3, wo das dritte Addierglied eine ODER-Exklusive Verknuepfung ist.

5. Verfahren zur Vektordarstellung von Textwoerten zum Vergleich mit einem Woerterbuch in einem Textverarbeitungssystem mit einem Miniprozessor, das mittels dem Geraet nach einem der vorhergehenden Ansprueche durchgefuehrt ist und folgenden Schritt aufweist:

1) Umsetzung der den eingegebenen Textwoerten entsprechenden Zeichen in numerische Darstellungen, durch folgende Schritte gekennzeichnet:
2a) Anwendung der numerischen Darstellungen, um Zugriff zu einer Groessen-Gewichtstabelle zu haben,
b) Summieren der gewichteten in der Tabelle ausgewaehlten Groessen zur Erzeugung des numerischen zu dem Vektor beitragenden Groessenwerts,
3a) schleifenverlaufende Akkumulierung der numerischen Darstellungen zur Erzeugung von Teilsummen,
b) Zugriff zu einer binaeren Speichereinheit, der eine binaere Zahl fuer jede Teilsumme entnommen ist,
c) Basis-2-Addieren der ausgegebenen binaeren Zahlen,
d) Umsetzung der Basis-2-Summe in einen dezimalen zu dem Vektor beitragenden Winkelwert,
4) Ausgabe und Zufuehrung des Vektor-Groessenwerts und Winkelwerts zu dem Miniprozessor.

6. Verfahren nach Anspruch 5, in dem der Schritt a)1) auch folgende Schritte aufweist:

— schleifenverlaufender Vergleich der resultierenden Teilsumme mit einem vorbestimmten Speicher-Grenzwert fuer die binaere Speichereinheit und Subtrahieren des Speicher-Grenzwerts von der Teilsumme, wenn die Teilsumme hoeher als den Speicher-Grenzwert ist, so dass eine zyklische Adressfolge zu die binaere Speichereinheit erfolgt.

**Revendications**

1. Appareil pour une représentation vectorielle de mots d'entrée en vue d'un comparaison avec un dictionnaire de mots correctement orthographiés dans un système de traitement de texte comprenant un miniprocesseur (1), une mémoire (3) pour emmagasiner des instructions pour le contrôle dudit miniprocesseur, une mémoire (2) pour emmagasiner les représentations des mots correctement orthographiés dudit dictionnaire, et des moyens de décodage connectés audit miniprocesseur pour décoder les caractéres des mots d'entrée en représentations numériques; ledit appareil étant caractérisé en ce qu'il comprend:

des moyens d'emmagasinage de tables de valeurs (30) connectés de façon adressable auxdits moyens de décodage pour emmagasiner des valeurs correspondant à chaque sortie de représentation numérique par lesdits moyens de décodage;
des premiers moyens d'addition (8, 9) connectés auxdits moyens d'emmagasinage de tables de valeurs et audit miniprocesseur pour accumuler une somme des valeurs fournies par lesdits moyens d'emmagasinage de tables de valeurs et pour envoyer ladite somme de valeurs audit miniprocesseur;
des deuxièmes moyens d'addition (12, 13) connectés auxdits moyens de décodage pour accumuler des sommes partielles de ladite sortie de représentations numériques par lesdits moyens de décodage;
des moyens d'emmagasinage de table binaire (17) connectés auxdits deuxièmes moyens d'addition pour emmagasiner plusieurs nombres binaires adressables pour donner en sortie l'un desdits nombres binaires pour chaque somme partielle accumulée par lesdits deuxièmes moyens d'addition;
des troisièmes moyens d'addition (18, 19) connectés auxdits moyens d'emmagasinage de table binaire pour accumuler une somme modulo-deux de la sortie desdits moyens d'emmagasinage de tables binaires, et
des moyens de décodage binaire-décimal (20) connectés auxdits troisièmes moyens d'addition et audit miniprocesseur pour convertir la sortie desdits troisièmes moyens d'addition sous forme d'un nombre binaire en une valeur décimale d'angle et pour envoyer le résultat audit miniprocesseur;

2. Appareil selon la revendication 1, dans lequel lesdits moyens d'emmagasinage de table binaire comprennent:

une table binaire (17) pour emmagasiner plusieurs nombres binaires;
des moyens d'enregistrement (6) connectés audit miniprocesseur pour emmagasiner une valeur représentant la taille de ladite table binaire;
des moyens de comparaison (15) connectés auxdits deuxièmes moyens d'addition et auxdits moyens d'enregistrement pour comparer la somme partielle accumulée à la valeur de la taille de la table, et

des moyens de porte (14) connectés à ladite table binaire et auxdits deuxièmes moyens d'addition et pouvant être actionnés par lesdits moyens de comparaison en vue d'un accès à ladite table binaire à l'adresse égale à ladite somme partielle lorsque la somme partielle est inférieure à ladite valeur de la taille de la table.

3. Appareil selon la revendication 2 comprenant en outre des moyens (10, 11) connectés auxdits deuxièmes moyens d'addition et auxdits moyens d'enregistrement et pour, en réponse auxdits moyens de comparaison, soustraire ladite valeur de la taille de la table de ladite somme partielle lorsque ladite somme partielle dépasse ladite valeur de la taille de la table.

4. Appareil selon la revendication 1, 2 ou 3, dans lequel lesdits troisièmes moyens d'addition sont des moyens OU exclusif.

5. Méthode pour une représentation vectorielle de mots d'un texte en vue d'une comparaison avec un dictionnaire de mots dans un système de traitement de texte comprenant un miniprocesseur, ladite méthode s'accomplissant à l'aide de l'appareil conforme à l'une quelconque des revendications précédentes, comprenant l'étape qui consiste;

(a)—à convertir les caractères des mots due texte d'entrée en des représentations numériques, et etant caractérisée par les étapes suivantes:

(b)—utilisation desdites représentations numériques pour accès à une table de pondération de valeurs, et

(b2)—addition des pondérations des valeurs sélectionnées dans ladite table afin de produire une composante vectorielle de longueur,

(c1)—accumulation itérative desdites représentations numériques afin de produire des sommes partielles,

(c2)—accès à und dispositif d'emmagasinage binaire afin de produire un nombre binaire pour chaque somme partielle produite,

(c3)—addition modulo-2 desdits nombres binaires, et

(c4)—conversion de la somme modulo-2 en une composante vectorielle d'angle décimale, et

(d)—envoi desdites composantes vectorielles de longueur et d'angle audit miniprocesseur.

6. Méthode selon la revendication 5 dans laquelle l'étape (c1) comprend en outre les étapes qui consistent à:

comparer de façon itérative la somme partielle produite à une valeur limite d'emmagasinage prédéterminée pour le dispositif d'emmagasinage binaire et à soustraire ladite valeur limite d'emmagasinage de ladite somme partielle losque ladite somme partielle dépasse ladite valeur limite d'emmagasinage afin de produire le retour d'accès au point de départ dudit dispositif d'emmagasinage binaire.

FIG. 1

FIG. 2

WORD $\longrightarrow$ 23 + 15 + 18 + 4

17

| $n_1$ | $n_2$ | $n_3$ | $\cdot$ $\cdot$ | $n_{23}$ | $\cdot$ $\cdot$ $\cdot$ $\cdot$ $\cdot$ $\cdot$ $\cdot$ $\cdot$ | $n_K$ |

23 (W) $\longrightarrow$ $n_{23}$

17

| $n_1$ | $n_2$ | $n_3$ | $\circ$ $\circ$ $\circ$ | $n_{38}$ | $\cdot$ $\cdot$ $\cdot$ $\cdot$ $\cdot$ | $n_K$ |

15 (0) $\longrightarrow$ $n_{23} \, XOR \, n_{38}$

(23 + 15 = 38)

17

| $n_1$ | $n_2$ | $n_3$ | $\cdot$ $\circ$ $\circ$ $\cdot$ $\cdot$ | $n_{56}$ | $\cdot$ $\cdot$ $\cdot$ | $n_K$ |

18 (R) $\longrightarrow$ $n_{23} \, XOR \, n_{38} \, XOR \, n_{56}$

(38 + 18 = 56)

17

| $n_1$ | $n_2$ | $n_3$ | $\cdot$ $\cdot$ $\cdot$ $\cdot$ $\cdot$ $\cdot$ $\cdot$ | $n_{60}$ | $\cdot$ $\cdot$ | $n_K$ |

4 (D) $\longrightarrow$ $n_{23} \, XOR \, n_{38} \, XOR -$

(56 + 4 = 60) $n_{56} \, XOR \, n_{60}$

FIG. 3